**Europäisches Patentamt**

**European Patent Office**

**Office européen des brevets**

(19)

(11) Veröffentlichungsnummer: **0 082 968**

**B1**

(12) **EUROPÄISCHE PATENTSCHRIFT**

(45) Veröffentlichungstag der Patentschrift:
15.01.86

(21) Anmeldenummer: **82111055.8**

(22) Anmeldetag: **30.11.82**

(51) Int. Cl.⁴: **B 23 B 31/30**

(54) Vorrichtung zur Einstellung der Schaltpunkte für die Wegkontrolle von umlaufenden Spanneinrichtungen.

(30) Priorität: **15.12.81 DE 3149600**

(43) Veröffentlichungstag der Anmeldung:
**06.07.83 Patentblatt 83/27**

(45) Bekanntmachung des Hinweises auf die Patenterteilung:
**15.01.86 Patentblatt 86/3**

(84) Benannte Vertragsstaaten:
**CH FR GB IT LI SE**

(56) Entgegenhaltungen:
**DE-A-1 752 599**
**DE-A-2 952 636**
**DE-A-3 117 850**
**DE-B-1 911 558**
**GB-A-2 092 924**

**INDUSTRIE-ANZEIGER, Band 92, Nr. 32, 17. April 1970, Essen, F. DORNBUSCH "Mehr Sicherheit durch Wegekontrolle beim Spannen", Seiten 700, 701**

(73) Patentinhaber: **Paul Forkardt GmbH & Co. KG, Rosenstrasse 44- 46, D-4000 Düsseldorf 1 (DE)**

(72) Erfinder: **Steinberger, Josef, Sebastiansweg 30, D-4000 Düsseldorf 1 (DE)**
Erfinder: **Beckers, Heinz, Zeppelinstrasse 60, D-4060 Viersen 11 (DE)**
Erfinder: **Kempken, Rainer, Vennstrasse 40, D-4236 Hamminkeln 4 (DE)**

(74) Vertreter: **Patentanwälte Dipl.- Ing. Alex Stenger Dipl.- Ing. Wolfram Watzke Dipl.- Ing. Heinz J. Ring, Kaiser- Friedrich- Ring 70, D-4000 Düsseldorf 11 (DE)**

## Beschreibung

Die Erfindung betrifft eine Vorrichtung zur Einstellung der Schaltpunkte mindestens eines Schalters für die Wegkontrolle von umlaufenden Spanneinrichtungen, deren Spannkraft durch eine Axialbewegung des Kolbens eines mitumlaufenden Druckmittelzylinders erzeugt wird, dem das Druckmittel durch ein nichtumlaufendes Druckmittelüberleitungsgehäuse zugeführt wird, mit einer am Druckmittelüberleitungsgehäuse befestigten Halterung für den Schalter und mindestens einem den Schalter betätigenden Nocken, der über eine Verbindungsstange mit dem Kolben des Druckmittelzylinders verbunden ist.

Bei umlaufenden Spanneinrichtungen, die mittels eines mitumlaufenden Druckmittelzylinders betätigt werden, ist es erforderlich, den vorgeschriebenen Arbeitsbereich der Spanneinrichtung einzuhalten, da außerhalb dieses Arbeitsbereiches keine Garantie dafür gegeben ist, daß einerseits das Werkstück zuverlässig in den Spannelementen der Spanneinrichtung gehalten wird und andererseits die Spannelemente in dem erforderlichen Maße mit dem Betätigungselement in Eingriff stehen, welches zur radialen Spannbewegung der Spannelemente in axialer Richtung von dem Kolben des Druckmittelzylinders betätigt wird. Zu diesem Zweck ist eine Wegkontrolle mittels mindestens eines Schalters vorgesehen. Die Wegkontrolle erfolgt mit Hilfe mindestens eines Nockens, der relativ zum Schalter bewegt wird und zu diesem Zweck über eine Verbindungsstange mit dem Kolben des Druckmittelzylinders verbunden ist. Über die Stellung des Kolbens des Druckmittelzylinders wird die entsprechende Stellung des Betätigungselements der vom Druckmittelzylinder betätigten Spanneinrichtung überwacht. Bei dieser Wegkontrolle ist insbesondere darauf zu achten, daß in beiden Spannrichtungen ein ausreichender Nachspannhub für die Spanneinrichtung zur Verfügung steht. Es muß in jedem Fall dafür gesorgt werden, daß die vom Druckmittelzylinder aufgebrachte Axialkraft auch in Spannkraft umgesetzt wird. Dies ist dann nicht mehr der Fall, wenn Teile des Druckmittelzylinders oder der Spanneinrichtung am Ende ihres Bewegungsbereiches angekommen sind und zur Anlage kommen, weil in diesem Fall die Axialkraft des Druckmittelzylinders nicht mehr in eine an den Spannelementen der Spanneinrichtung wirksam werdende Spannkraft umgesetzt wird.

Eine Vorrichtung der voranstehend beschriebenen Art zur Einstellung der Schaltpunkte mindestens eines Schalters für die Wegkontrolle von umlaufenden Spanneinrichtungen ist aus der DE-A 1 752 599 bekannt. Bei derartigen bekannten Vorrichtungen werden unterschiedliche Ausführungen für die Nocken und demgemäß für die Einstellung der Schaltpunkte verwendet.

Bei einer aus der DE-B 2 952 636 bekannten Ausführung werden einteilige Nocken verwendet, die jeweils mit zwei Schalterhebungen versehen sind. Diese befinden sich in einem vorgegebenen Abstand, der dem Arbeitsbereich der zugehörigen Spanneinrichtung entspricht. Da an der Spindel einer Werkzeugmaschine unterschiedliche Spanneinrichtungen angebracht werden können, die jeweils von demselben Druckmittelzylinder betätigt werden müssen, ist es bei dieser Ausführung stets erforderlich, die der jeweiligen Spanneinrichtung zugeordneten Nocken auszuwechseln und in der richtigen Lage an der Verbindungsstange anzubringen. Ein falscher Nocken führt in diesem Fall zu einer fehlerhaften Wegkontrolle und damit zu einer großen Unfallgefahr.

Bei einer anderen bekannten Ausführung werden zwei unabhängig voneinander einstellbare Nocken verwendet, deren Ausgangslage gegenüber dem Schalter in Axialrichtung der Spanneinrichtung einstellbar ist.

Bei beiden bekannten Ausführungen besteht die Schwierigkeit, daß nicht nur die axiale Stellung der Nocken mit dem jeweiligen Arbeitsbereich der zu überwachenden Spanneinrichtung übereinstimmen muß, sondern auch die radiale Zuordnung zwischen Nocken und Schalter. Durch Rundlauffehler der hinter dem Druckmittelüberleitungsgehäuse austretenden Verbindungsstange können Fehlbetätigungen der Schalter eintreten, die meist an einer Konsole des Spindelgehäuses befestigt sind. Da die Nocken bei mechanischen Schaltern mit Auflaufschrägen für den Schalterstößel ausgeführt sind, verursachen bereits geringe Rundlauffehler Fehlbetätigungen, welche auch durch ein genaues Einstellen der axialen Lage der Nocken nicht verhindert werden können. Zudem sind die bekannten Vorrichtungen nur mit einem verhältnismäßig großen Aufwand einstellbar, da eine Justierung nicht nur in axialer, sondern auch in radialer Richtung erforderlich ist. Bei Verwendung von mit Anlaufschrägen versehenen Nocken wirkt jedoch eine radiale Verstellung wie eine Axialverstellung, so daß ein großes Geschick dazu gehört, die Schaltpunkte richtig einzustellen.

Der Erfindung liegt die Aufgabe zugrunde, eine Vorrichtung der eingangs beschriebenen Art zur Einstellung der Schaltpunkte mindestens eines Schalters für die Wegkontrolle von umlaufenden Spanneinrichtungen zu schaffen, die nicht nur die Einstellung der Schaltpunkte erleichtert, sondern Fehlschaltungen aufgrund von Rundlauffehlern vermeidet.

Die Lösung dieser Aufgabenstellung durch die Erfindung ist dadurch gekennzeichnet, daß die Verbindungsstange in der Halterung axial beweglich geführt ist, der Nocken gegen Drehung in der Halterung gesichert ist und die Verbindungsstange derart mit dem Nocken verbunden ist, daß nur axiale Bewegungen auf den Nocken übertragen werden.

Durch die neben der drehbaren Lagerung ausschließlich axial bewegliche Führung der Verbindungsstange und damit des oder der Nocken wird eine Relativbewegung in radialer Richtung zwischen Nocken und Schalter ausgeschlossen. Auch wenn Rundlaufungenauigkeiten auftreten, ergibt sich bei der erfindungsgemäßen Vorrichtung keine Veränderung der relativen Lage zwischen Schalter und Nocken, weil einerseits der Schalter über seine Halterung am Druckmittelüberleitungsgehäuse angeordnet ist, welches auf sich mit dem Druckmittelzylinder drehenden Ansatz am Druckmittelzylinder gelagert ist, und weil andererseits eine Lagerung zwischen der die Nocken tragenden Verbindungsstange und der die Schalter tragenden Halterung vorgesehen ist, die ausschließlich eine Axialbewegung zwischen Nocken und Schalter zuläßt. Auf diese Weise werden Fehlbetätigungen der Schalter durch Rundlauffehler bei richtig zueinander eingestellten Nocken und Schaltern vermieden.

Gemäß einer bevorzugten Ausführungsform der Erfindung sind an der Verbindungsstange je Schalter mindestens zwei Nocken angeordnet, von denen mindestens ein Nocken in Achsrichtung der Verbindungsstange verstellbar ist. Hierdurch wird die Einstellung der Schaltpunkte vereinfacht.

Eine weitere Vereinfachung ergibt sich erfindungsgemäß dadurch, daß sämtliche Nocken auf einem Nockenträger angeordnet sind, der unverdrehbar in der Halterung für den oder die Schalter geführt und über ein Lager axial unverschiebbar mit der Verbindungsstange verbunden ist. Bei dieser erfindungsgemäßen Ausgestaltung wird die Verbindungsstange nur in axialer Richtung vom Kolben des Druckmittelzylinders verschoben und läuft mit dem gesamten Druckmittelzylinder um, wogegen der Nockenträger und die Halterung für den Schalter nicht mitumlaufen. Während somit die Halterung durch die Verbindung mit dem Druckmittelüberleitungsgehäuse axial unverschiebbar angeordnet ist, macht die Verbindungsstange jede Axialbewegung des Kolbens mit, so daß der Hub des Kolbens und damit die Stellung der jeweils betätigten Spanneinrichtung überwacht werden kann. Hierdurch ergibt sich eine gute und sichere Führung der Nocken in der Halterung und bei einfacher Einstellbarkeit eine hohe Wiederholgenauigkeit der Schaltpunkte.

Bei einer erfindungsgemäßen Weiterbildung ist der Schalter in Achsrichtung einstellbar an der Halterung befestigt und der Nockenträger zugleich als ein Nocken ausgebildet; der zweite Nocken ist auf dem Nockenträger in Achsrichtung verstellbar. Bei dieser Ausführungsform ist eine einfache Einstellung möglich, die erfindungsgemäß noch dadurch verbessert werden kann, daß der verstellbare Nocken unverdrehbar in der Halterung geführt und über ein Gewinde axial verstellbar auf dem zur Verstellung des Nockens drehbaren Nockenträger angeordnet ist.

Der verstellbare Nocken kann bei einer bevorzugten Ausführungsform mittels einer Klemmschraube feststellbar sein, deren Kopf als Verdrehsicherung in einer Axialnut der Halterung geführt ist. Hierdurch übernimmt die Klemmschraube zwei Funktionen, nämlich einmal eine Festlegung des Nockens auf dem Nockenträger und zum anderen eine Sicherung des Nockenträgers gegen Verdrehen.

Bei einer alternativen Ausführungsform der Erfindung kann der Nockenträger mindestens eine axial verlaufende Aufnahme für jeweils mindestens einen in der Aufnahme festsetzbaren Nocken aufweisen, dem ein an der Halterung unverschiebbar befestigter Schalter zugeordnet ist. Bei dieser Ausführungsform muß der oder die Nocken in der Aufnahme verstellt werden, wenn der Arbeitsbereich der jeweils angebauten Spanneinrichtung eingestellt wird. Auch in diesem Fall kann erfindungsgemäß der Nocken als Verdrehsicherung für den Nockenträger in einer Axialnut der Halterung geführt sein.

Mit der Erfindung wird schließlich vorgeschlagen, über den Umfang verteilt mehrere Schalter an der Halterung zu befestigen, für deren zugehörige Nocken jeweils eine axial verlaufende Aufnahme am Nockenträger ausgebildet ist. Bei dieser Ausführungsform ist es möglich, unterschiedliche Spanneinrichtungen, die an der Spindel der jeweiligen Werkzeugmaschine angebracht werden können, jeweils einem bestimmten Schalter zuzuordnen. Dieser Schalter wird über elektrische Maßnahmen jeweils dann in Funktion genommen, wenn die zugehörige Spanneinrichtung an der Spindel der Werkzeugmaschine befestigt wird. Auf diese Weise ist es lediglich erforderlich, den oder die zu einem bestimmten Schalter gehörenden Nocken bei der ersten Verwendung einer Spanneinrichtung einzustellen, weil die Zuordnung der Nocken zum Schalter unverändert bleibt, auch wenn die zugehörige Spanneinrichtung von der Spindel abgenommen wird. Beim Anbau einer anderen Spanneinrichtung wird lediglich der dieser Spanneinrichtung zugehörige Schalter in Funktion gesetzt, wogegen die anderen Schalter für die wahlweise anbaubaren Spanneinrichtungen wirkungslos bleiben.

Auf der Zeichnung sind zwei Ausführungsbeispiele der erfindungsgemäßen Vorrichtung dargestellt, und zwar zeigen:

Fig. 1 einen Längsschnitt durch eine erste Ausführungsform mit einem in Achsrichtung der Halterung einstellbaren Schalter und einem zweiteiligen Nocken,

Fig. 2 eine teilweise geschnittene Stirnansicht zu Fig. 1,

Fig. 3 einen Längsschnitt durch eine zweite Ausführungsform mit einem unverstellbaren Schalter und zwei unabhängig voneinander relativ zu einem Nockenträger verstellbaren Nocken und

Fig. 4 einen Querschnitt gemäß der Schnittlinie IV-IV in Fig. 3, welche zeigt, daß bei der Ausführungsform nach Fig. 3 mehrere Schalter und Nockenpaare angeordnet werden können.

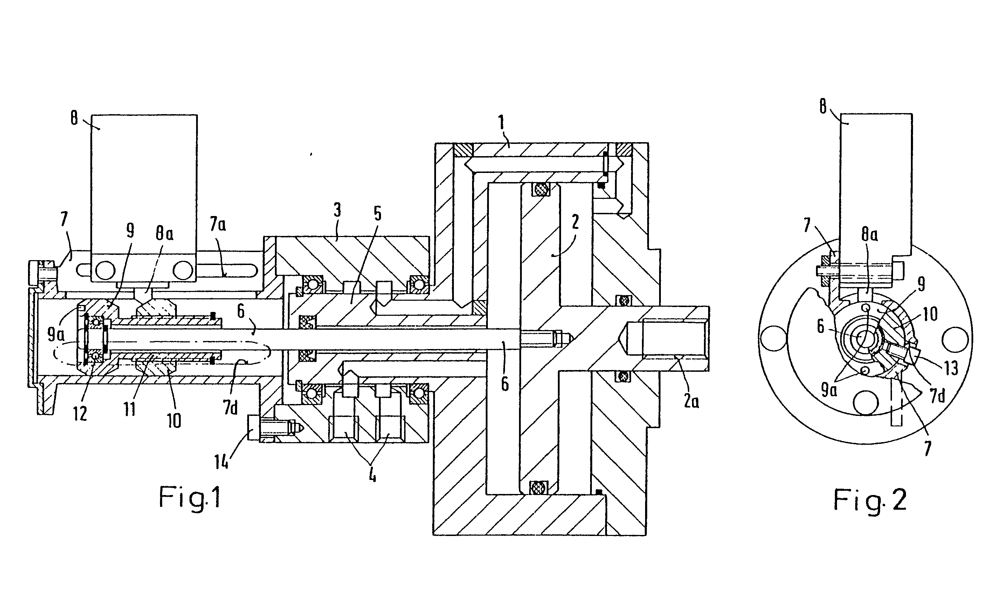

Beim ersten Ausführungsbeispiel gemäß den Fig. 1 und 2 ist ein Druckmittelzylinder 1 zu erkennen, in welchem ein Kolben 2 axial verschiebbar geführt ist. Die aus dem Gehäuse des Druckmittelzylinders 1 herausgeführte Kolbenstange 2a wird mit dem Betätigungsglied einer auf der Zeichnung nicht dargestellten Spanneinrichtung verbunden. Der Druckmittelzylinder dient somit zur Erzeugung der Spannkraft der umlaufend an der Spindel einer Werkzeugmaschine befestigten Spanneinrichtung. Als Spanneinrichtungen kommen Backenfutter beliebiger Bauarten, Spannpatronen, Spanndorne oder ähnliche Spanneinrichtungen in Frage, welche wahlweise an der Spindel der Werkzeugmaschine befestigt werden können.

Das zur Verschiebung des Kolbens 2 im Druckmittelzylinder 1 benötigte Druckmittel wird dem Druckmittelzylinder 1 über ein Druckmittelüberleitungsgehäuse 3 zugeführt. Dieses mit zwei Druckmittelanschlüssen 4 versehene Druckmittelüberleitungsgehäuse 3 ist auf einem achsähnlichen Ansatz 5 drehbar gelagert, der am Druckmittelzylinder 1 befestigt ist und zur Überleitung des dem Druckmittelüberleitungsgehäuse 3 zugeleiteten Druckmittels in die Anschlußkanäle des Druckmittelzylinders 1 dient. Auf diese Weise ist es möglich, dem Druckmittelzylinder 1 auch während des Umlaufens Druckmittel zuzuführen, weil das auf dem Ansatz 5 drehbar gelagerte Druckmittelüberleitungsgehäuse 3 stillsteht.

Durch eine zentrale Bohrung im Druckmittelüberleitungsgehäuse 3 und in der benachbarten Stirnwand des Druckmittelzylinders 1 ist eine Verbindungsstange 6 abgedichtet hindurchgeführt, die am Kolben 2 befestigt ist. Diese Verbindungsstange 6 rotiert demgemäß mit dem gesamten Druckmittelzylinder 1 und macht außerdem die Axialbewegungen seines Kolbens 2 mit. Aus diesem Grunde ist die Verbindungsstange 6 geeignet, die jeweilige Stellung des Kolbens 2 und damit des Betätigungsgliedes der angeschlossenen Spanneinrichtung nach außen zu signalisieren. Über die Verbindungsstange 6 kann somit eine Wegkontrolle des Druckmittelzylinders 1 und damit der angebauten Spanneinrichtung erfolgen.

Beim Ausführungsbeispiel nach Fig. 1 ist am Druckmittelüberleitungsgehäuse 3 eine Halterung 7 befestigt, die einen Schalter 8 trägt. Da das Druckmittelüberleitungsgehäuse 3 nicht an den Umdrehungen des Druckmittelzylinders 1 teilnimmt, stehen demgemäß auch die Halterung 7 und der Schalter 8 still, wenn die Spanneinrichtung rotiert.

Beim Ausführungsbeispiel nach Fig. 1 und 2 besitzt der Schalter 8 einen Stößel 8a, der von zwei Nocken 9 bzw. 10 betätigt wird, die an der Verbindungsstange 6 angeordnet sind und demgemäß mit dieser in axialer Richtung vom Kolben 2 des Druckmittelzylinders 1 verschoben werden. Damit die Nocken 9 und 10 nicht an der Drehbewegung der Verbindungsstange 6 teilnehmen, sind sie auf einem Nockenträger 11 angeordnet, der über ein Wälzlager 12 drehbar, jedoch in axialer Richtung unverschiebbar mit der Verbindungsstange 6 verbunden ist. Die Verbindungsstange 6 rotiert demgemäß innerhalb des stillstehenden Nockenträgers 11, nimmt diesen jedoch bei einer Bewegung in Achsrichtung mit.

Die in den Fig. 1 und 2 dargestellte erste Ausführungsform zeigt einen Nocken 9, der fest am Nockenträger 11 ausgebildet ist. Demgemäß geschieht die Einstellung des einen Schaltpunktes durch eine Axialverschiebung des Schalters 8 an der Halterung 7, die zu diesem Zweck mit einer Verstellbahn 7a versehen ist. Der zweite Nocken 10 ist verstellbar auf dem Nockenträger 11 angeordnet, und zwar mittels eines Gewindes, welches einerseits auf der Mantelfläche des Nockenträgers 11 und andererseits in der zentralen Bohrung des Nockens 10 ausgebildet ist.

Wie aus Fig. 2 hervorgeht, wird der verstellbare Nocken 10 mittels einer Klemmschraube 13 in der jeweiligen Stellung auf dem Nockenträger 11 festgelegt. Der Kopf dieser Klemmschraube 13 ist in einer Axialnut 7d der Halterung 7 geführt, so daß die Klemmschraube 13 als Verdrehsicherung des Nockens 10 wirkt. Nach Lockern der Klemmschraube 13 kann somit durch ein Verdrehen des Nockenträgers 11 eine Axialverschiebung des Nockens 10 auf dem Nockenträger 11 erfolgen. Zu diesem Zweck ist der einstückig mit dem Nockenträger 11 ausgebildete Nocken 9 mit Schlüsselflächen 9a versehen. Beim Ausführungsbeispiel handelt es sich hierbei um axiale Anbohrungen für einen Spezialschlüssel.

Zur Wegkontrolle des Druckmittelzylinders 1 bzw. der von diesem Druckmittelzylinder 1 betätigten Spanneinrichtung ist es erforderlich, die Spanneinrichtung in die hintere Endlage ihres vorgegebenen Arbeitsbereiches zu bringen und in dieser Endlage den Schalter 8 an der Halterung 7 derart zu verstellen, daß unter Einhaltung des erforderlichen Nachspannweges der richtige Schaltpunkt festgelegt wird. Danach wird die Spanneinrichtung mittels des Druckmittelzylinders 1 in die andere Endstellung des Arbeitsbereiches überführt. Nunmehr wird nach Lockern der Klemmschraube 13 der Nockenträger 11 gedreht, so daß der Nocken 10 auf dem Nockenträger 11 in axialer Richtung verstellt wird. Sobald der verstellbare Nocken 10 die richtige Lage auf dem Nockenträger 11 erreicht hat, welche am anderen Ende des Arbeitsbereiches der Spanneinrichtung den notwendigen Nachspannhub sichert, wird die Klemmschraube 13 festgedreht. Die beiden Schaltpunkte der Wegkontrolle sind ordnungsgemäß eingestellt; die vom Druckmittelzylinder 1 betätigte Spanneinrichtung ist betriebsbereit.

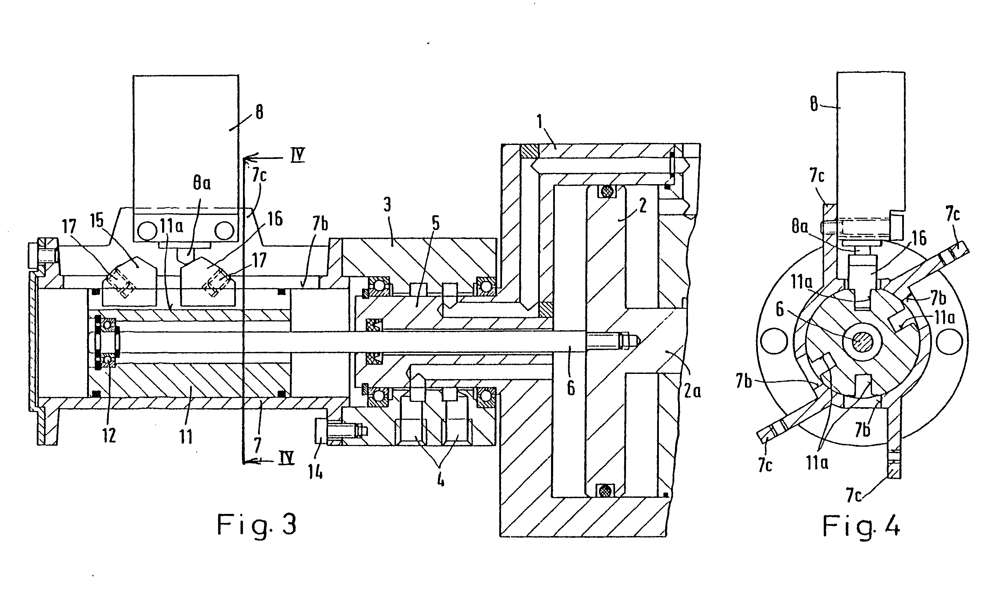

Beim zweiten Ausführungsbeispiel nach den Fig. 3 und 4 ist wiederum die Verbindungsstange 6 zu erkennen, welche über ein Wälzlager 12 mit dem Nockenträger 11 verbunden ist. Auch in diesem Fall ist der Nockenträger 11 ausschließlich in axialer Richtung beweglich in einer Halterung 7 geführt, welche mittels Schrauben 14 am nicht dargestellten Druckmittelüberleitungsgehäuse 3 befestigt wird. Die Halterung 7 ist beim zweiten Ausführungsbeispiel mit insgesamt vier Flanschen 7c versehen, an denen jeweils ein Schalter 8 befestigt werden kann. Der besseren Übersichtlichkeit wegen ist in den Fig. 3 und 4 jedoch nur ein derartiger Schalter 8 gezeichnet.

Der Nockenträger 11 ist bei der zweiten Ausführungsform mit einer der Anzahl der Schalter 8 bzw. Flanschen 7c entsprechenden Zahl von axial verlaufenden Aufnahmen 11a versehen, in denen jeweils zwei Nocken 15 und 16 verstellbar angeordnet sind. Diese Nocken 15 bzw. 16 können auf geeignete Weise mittels jeweils einer Klemmschraube 17 in der vorgegebenen Stellung in der Aufnahme 11a des Nockenträgers 11 festgesetzt werden.

Um ein Mitdrehen des Nockenträgers 11 mit der Verbindungsstange 6 zu verhindern, ragen die Nocken 15 und 16 in eine an der Halterung 7 ausgebildete Axialnut 7b. Entsprechend der Zahl der Aufnahmen 11a sind mehrere Axialnuten 7b in der Halterung 7 ausgebildet.

Die zur Wegkontrolle der jeweiligen Spanneinrichtung erforderlichen Einstellarbeiten werden wiederum ausgeführt, wenn sich die Spanneinrichtung in den Endstellungen ihres Arbeitsbereiches befindet. Bei der zweiten Ausführungsform werden in beiden Endstellungen die Nocken 15 bzw. 16 nach Lösen ihrer Klemmschraube 17 derart verstellt, daß sie an der vorgegebenen Stelle den Stößel 8a des Schalters 8 betätigen, und zwar wiederum unter Einhaltung des erforderlichen Nachspannhubes.

Bei beiden voranstehend erläuterten Ausführungsformen wird durch die axial bewegliche Führung der Verbindungsstange 6 in der Halterung 7 erreicht, daß keine Rundlauffehler der Nocken 9 und 10 bzw. 15 und 16 auftreten, die zu Fehlbetätigungen der Schalter 8 führen können. Sowohl bei der Ausführungsform nach den Fig. 3 und 4 als auch bei der Ausführungsform nach den Fig. 1 und 2 ist es möglich, mehrere Schalter 8 an der Halterung 7 anzuordnen. In Fig. 2 ist zu erkennen, daß auch die erste Ausführungsform des Halters 7 zur Anordnung eines zweiten Schalters 8 geeignet ist. Wenn diesen zusätzlichen Schaltern - wie bei der Ausführungsform nach den Fig. 3 und 4 angedeutet - unabhängig von den anderen Nocken einstellbare Nocken zugeordnet sind, ist es bei einem Wechsel der vom Druckmittelzylinder 1 betätigten Spanneinrichtung lediglich erforderlich, den zugehörigen Schalter 8 elektrisch anzuwählen, ohne daß in diesem Fall ein neues Einstellen der Schaltpunkte für die Wegkontrolle erforderlich ist.

**Bezugsziffernliste:**

1 Druckmittelzylinder
2 Kolben

2a Kolbenstange
3 Druckmittelüberleitungsgehäuse
4 Druckmittelanschluß
5 Ansatz
6 Verbindungsstange
7 Halterung
7a Verstellbahn
7b, 7d Axialnut
7c Flansch
8 Schalter
9 Nocke
9a Schlüsselfläche
10 Nocke
11 Nockenträger
11a Aufnahme
12 Wälzlager
13 Klemmschraube
14 Schraube
15 Nocke
16 Nocke
17 Klemmschraube

**Patentansprüche**

1. Vorrichtung zur Einstellung der Schaltpunkte mindestens eines Schalters (8) für die Wegkontrolle von umlaufenden Spanneinrichtungen, deren Spannkraft durch eine Axialbewegung des Kolbens (2) eines mitumlaufenden Druckmittelzylinders (1) erzeugt wird, dem das Druckmittel durch ein nichtumlaufendes Druckmittelüberleitungsgehäuse (3) zugeführt wird, mit einer am Druckmittelüberleitungsgehäuse befestigten Halterung (7) für den Schalter und mindestens einem den Schalter betätigenden Nocken (9, 10 - 15, 16), der über eine Verbindungsstange mit dem Kolben des Druckmittelzylinders verbunden ist, <u>dadurch gekennzeichnet,</u> daß die Verbindungsstange (6) in der Halterung (7) axial beweglich geführt ist, der Nocken gegen Drehung in der Halterung gesichert ist und die Verbindungsstange derart mit dem Nocken verbunden ist, daß nur axiale Bewegungen auf den Nocken übertragen werden.

2. Vorrichtung nach Anspruch 1, dadurch gekennzeichnet, daß an der Verbindungsstange (6) je Schalter (8) mindestens zwei Nocken (9,10) angeordnet sind, von denen mindestens ein Nocken (10) in Achsrichtung der Verbindungsstange (6) verstellbar ist.

3. Vorrichtung nach Anspruch 1 und 2, dadurch gekennzeichnet, daß sämtliche Nocken (9, 10; 15, 16) auf einem Nockenträger (11) angeordnet sind, der unverdrehbar in der Halterung (7) für den oder die Schalter (8) geführt und über ein Lager (12) axial unverschiebbar mit der Verbindungsstange (6) verbunden ist.

4. Vorrichtung nach Anspruch 3, dadurch gekennzeichnet, daß der Schalter (8) in Achsrichtung einstellbar an der Halterung (7) befestigt und der Nockenträger (11) zugleich als ein Nocken (9) ausgebildet ist und daß der zweite Nocken (10) auf dem Nockenträger (11) in Achsrichtung verstellbar ist.

5. Vorrichtung nach Anspruch 4, dadurch gekennzeichnet, daß der verstellbare Nocken (10) unverdrehbar in der Halterung (7) geführt und über ein Gewinde axial verstellbar auf dem zur Verstellung des Nockens (10) drehbaren Nockenträger (11) angeordnet ist.

6. Vorrichtung nach den Ansprüchen 4 und 5, dadurch gekennzeichnet, daß der verstellbare Nocken (10) mittels einer Klemmschraube (13) feststellbar ist, deren Kopf als Verdrehsicherung in einer Axialnut (7d) der Halterung (7) geführt ist.

7. Vorrichtung nach Anspruch 3, dadurch gekennzeichnet, daß der Nockenträger (11) mindestens eine axial verlaufende Aufnahme (11a) für jeweils mindestens einen in der Aufnahme (11a) festsetzbaren Nocken (15, 16) aufweist, dem ein an der Halterung (7) unverschiebbar befestigter Schalter (8) zugeordnet ist.

8. Vorrichtung nach Anspruch 7, dadurch gekennzeichnet, daß der Nocken (15, 16) als Verdrehsicherung für den Nockenträger (11) in einer Axialnut (7b) der Halterung (7) geführt ist.

9. Vorrichtung nach Anspruch 7 oder 8, dadurch gekennzeichnet, daß über den Umfang verteilt mehrere Schalter (8) an der Halterung (7) befestigt sind, für deren zugehörige Nocken (15, 16) jeweils eine axial verlaufende Aufnahme (11a) am Nockenträger (11) ausgebildet ist.

## Claims

1. A device for the setting of the switch points of at least one switch (8) for controlling the travel of rotating clamping devices, the clamping force of which is produced by means of an axial movement of the piston (2) of a co-rotating pressure medium cylinder (1), to which the pressure medium is supplied through a nonrotating pressure medium duct housing (3), with a holder (7) for the switch fixed to the pressure medium duct housing and at least one switch-actuating cam (9, 10 - 15, 16), which is connected by means of a connecting rod with the piston of the pressure medium cylinder, characterised in that,
the connecting rod (6) is axially movably guided in the holder (7), the cam is secured against rotation in the holder and the connecting rod is connected with the cam such that only axial movements are transmitted to the cam.

2. A device according to Claim 1, characterised in that at least two cams (9, 10) are disposed per switch (8) on the connecting rod (6), of which at least one cam (10) is adjustable in the axial direction of the connecting rod (6).

3. A device according to Claims 1 and 2, characterised in that all the cams (9, 10; 15, 16) are disposed on a cam carrier (11) which is guided non-rotatably in the holder for the switch(es) (8), and is axially non-displaceably connected with the connecting rod (6) by means of a bearing (12).

4. A device according to Claim 3, characterised in that the switch (8) is fixed on the holder (7) adjustably in an axial direction, and the cam carrier (11) is also formed as a cam (9), and in that the second cam (10) is adjustable on the cam carrier (11) in an axial direction.

5. A device according to Claim 4, characterised in that the adjustable cam (10) is non-rotatably guided in the holder (7) and is arranged by means of an axially adjustable screw thread on the rotatable cam carrier (11) for adjusting the cam (11).

6. A device according to Claims 4 and 5, characterised in that the adjustable cam (10) can be secured by means of a clamping screw (13) the head of which is guided in an axial groove (7d) of the holder (7) as a protection against torsion.

7. A device according to Claim 3, characterised in that the cam carrier (11) has at least one axially-extending recess (11a) each for at least one cam (15, 16) adapted to be held in the recess (11a), each of which is associated with one switch (8) non-movably secured on the holder (7).

8. A device according to Claim 7, characterised in that the cam (15, 16) is guided as a protection against torsion for the cam carrier (11), in an axial groove (7b) of the holder (7).

9. A device according to Claim 7 or 8, characterised in that several switches (8) distributed over the periphery are secured on the holder (7), for the associated cams (15, 16) of which an axially-extending recess (11a) is provided in the cam carrier (11).

## Revendications

1. Dispositif de réglage des points de commutation d'au moins un commutateur (8), destiné au contrôle de la course d'un système de serrage rotatif, dont la force de serrage est obtenue par le déplacement axial du piston (2) d'un vérin rotatif (1) qui reçoit le fluide de pression d'un manchon (3) de passage de fluide fixe en rotation, un support (7) fixé sur ce manchon étant destiné à recevoir le commutateur et au moins une butée (9, 10 -15, 16) agissant sur ledit commutateur et étant reliée au piston du vérin par une tige de liaison; dispositif caractérisé en ce que la tige de liaison (6) est guidée dans le support (7) de façon que le mouvement soit axial, la butée étant garantie contre la rotation dans le support et la tige de liaison étant assemblée avec la butée de façon que seuls des mouvements axiaux soient transmis à la butée.

2. Dispositif selon la revendication 1, caractérisé en ce qu'au moins deux butées (9, 10) par commutateur (8) sont disposées sur la tige de liaison (6), au moins l'une (10) de ces butées étant réglable dans la direction de l'axe de la tige de liaison (6).

3. Dispositif selon les revendications 1 et 2, caractérisé en ce que toutes les butées (9, 10 - 15, 16) sont disposées sur un porte-butées (11) guidé, sans possibilité de rotation dans le support (7) du ou des commutateurs (8), et relié à la tige de liaison (6) sans possibilité de déplacement axial par un palier (12).

4. Dispositif selon la revendication 3, caractérisé en ce que le commutateur (8) est fixé de façon réglable en direction axiale sur le support (7) et le porte-butées (11) est en même temps réalisé en tant que butée (9), la seconde butée (10) étant réglable en direction axiale sur le porte-butées (11).

5. Dispositif selon la revendication 4, caractérisé en ce que la butée réglable (10) est guidée sans possibilité de rotation dans le support (7) et disposée de façon réglable en direction axiale par un filetage sur le porte-butées (11) tournant pour le réglage de la butée (10).

6. Dispositif selon les revendications 4 et 5, caractérisé en ce que la butée réglable (10) peut être fixée au moyen d'une vis de blocage (13) dont la tête est guidée en tant que sécurité contre la rotation dans une rainure axiale (7d) du support (7).

7. Dispositif selon la revendication 3, caractérisé en ce que le porte-butées (11) comporte au moins un logement (11a) s'étendant suivant l'axe pour au moins une butée (15, 16) se fixant dans le logement (11a), butée à laquelle est associé un commutateur (8) monté sans possibilité de déplacement sur le support (7).

8. Dispositif selon la revendication 7, caractérisé en ce que la butée (15, 16) est guidée en tant que sécurité contre la rotation du porte-butées (11) dans une rainure axiale (7b) du support (7).

9. Dispositif selon la revendication 7 ou la revendication 8, caractérisé en ce que plusieurs commutateurs (8) répartis sur son pourtour sont fixés sur le support (7), un logement (11a) à extension axiale étant réalisé dans le porte-butées (11) pour chacune des butées (15, 16) correspondant à ces commutateurs.

Fig. 1

Fig. 2

Fig. 3

Fig. 4